# EUROPEAN PATENT APPLICATION

(11) **EP 4 435 896 A1**
(43) Date of publication of application: **25.09.2024**
(21) Application number: 22895551.4
(22) Date of filing: 11.11.2022
(51) Int. Cl.: H01M 4/58, H01M 4/136, H01M 4/62, H01M 10/052, H01M 10/0562, H01M 4/1397, H01M 10/0525

(54) **BATTERY**

(30) Priority: 17.11.2021 JP 2021187347
(71) Applicant: Mitsui Mining & Smelting Co., Ltd., Shinagawa-ku Tokyo 141-8584 (JP)
(72) Inventor: MIYASHITA, Norihiko, Ageo-shi, Saitama 362-0021 (JP)
(74) Representative: Novagraaf Technologies
(86) International application number: PCT/JP2022/042057
(87) International publication number: WO 2023/090269

(57) **Abstract**

The battery of the present invention includes a positive electrode, a negative electrode, and a solid electrolyte layer arranged between the positive electrode and the negative electrode. The positive electrode contains a positive electrode active material containing a lithium (Li) element, a sulfur (S) element, and a phosphorus (P) element and containing a crystal phase with an argyrodite-type crystal structure. The total amount of a nickel (Ni) element and a cobalt (Co) element contained in the positive electrode active material is 0.1% by mass or less. The total amount of rare metals (excluding the lithium (Li) element) contained in the positive electrode active material is preferably 0.1% by mass or less. The solid electrolyte preferably contains a lithium (Li) element, a sulfur (S) element, and a phosphorus (P) element and contains a crystal phase with an argyrodite-type crystal structure.

## Description

### Technical Field

The present invention relates to a battery in which the amount of rare metals used is reduced.

### Background Art

As positive electrode active materials in lithium ion batteries, compounds containing so-called rare metals are often used. Most typically, the positive electrode active material is a lithium transition metal composite oxide called NCM or LMNO containing lithium, and manganese, nickel, and/or cobalt. In addition to this, for example, Patent Literature 1 proposes the use of sulfides containing titanium and niobium, which are types of rare metals, as positive electrode active materials.

### Citation List

### Patent Literature

Patent Literature 1: US 2016/285097A1

### Summary of Invention

Since the various rare metals mentioned above are rare in existence on earth or are difficult to extract for technical or economic reasons, it is desirable to replace them with general-purpose elements from the viewpoint of industrial use. Furthermore, since rare metals are rare in existence, it is desirable to collect batteries after use and reuse rare metals, but collecting rare metals from used batteries is often not easy or not economically viable.

Accordingly, it is an object of the present invention to provide a battery that has characteristics similar to those of conventional lithium-ion batteries and in which the amount of at least a nickel (Ni) element and a cobalt (Co) element used is reduced.

The present invention is directed to a battery comprising: a positive electrode; a negative electrode; and a solid electrolyte layer arranged between the positive electrode and the negative electrode,
wherein the positive electrode comprises a positive electrode active material containing a lithium (Li) element, a sulfur (S) element, and a phosphorus (P) element and containing a crystal phase having an argyrodite-type crystal structure, and
the total amount of a nickel (Ni) element and a cobalt (Co) element contained in the positive electrode active material is 0.1% by mass or less.

### Brief Description of Drawings

[Fig. 1] Fig. 1 shows an initial charge-discharge curve of a battery obtained in Example 1.
[Fig. 2] Fig. 2 shows an initial charge-discharge curve of a battery obtained in Example2.
[Fig. 3] Fig. 3 shows an initial charge-discharge curve of a battery obtained in Example 6.
[Fig. 4] Fig. 4 shows an initial charge-discharge curve of a battery obtained in Comparative Example 1.
[Fig. 5] Fig. 5 shows an initial charge-discharge curve of a battery obtained in Comparative Example 4.
[Fig. 6] Fig. 6 is a graph showing cycle characteristics of the batteries obtained in the examples and comparative examples.

### Description of Embodiments

Hereinafter, the present invention will be described based on a preferred embodiment thereof. The present invention relates to a battery. The battery of the present invention has a positive electrode and a negative electrode. The battery of the present invention also has a solid electrolyte layer arranged between the positive electrode and the negative electrode. The battery of the present invention is characterized in that a positive electrode constituting the battery is constituted by industrially inexpensive and readily available materials, without using industrially rare metals to the extent possible.

Conventionally, rare metal elements (so-called rare metals) such as a lithium (Li) element, a nickel (Ni) element, and a cobalt (Co) element have been used as positive electrode active materials for positive electrodes of batteries, especially for positive electrodes of lithium-ion batteries. Rare metals, however, are expensive and their prices fluctuate largely due to their low distribution volume caused by relatively low existence in the earth's crust and high mining and refining costs. In addition, there is a risk that they will be used in resource strategies between countries. Therefore, there is a strong demand for the development of batteries that do not use rare metals as battery materials. The present invention satisfies such a demand.

In the battery of the present invention, the content of rare metals, in particular, the content of a Ni element and a Co element in the positive electrode active material for use in the positive electrode is lower than in conventional examples. Specifically, the total amount of s Ni element and s Co element contained in the positive electrode active material is preferably at a low level of 0.1% by mass or less. In the battery of the present invention, rare metals are not used as the positive electrode active material to the extent possible, and, instead, raw materials whose supply is stable and whose price fluctuates little are used to constitute the positive electrode active material. Specifically, a positive electrode active material containing a lithium (Li) element, a sulfur (S) element, and a phosphorus (P) element is used. The S element and the P element are readily available at low and stable prices. A Li element is an element classified as a rare metal, but among rare metals, it is relatively readily available at a relatively low price. It is possible to produce the battery of the present invention at a lower cost by using the positive electrode active material containing these elements. In addition, since only a Li element is a valuable metal that is to be collected during recycling of the battery, the collection is facilitated. Moreover, the amount of carbon dioxide generated during recycling can be reduced compared with the amount of carbon dioxide generated when recycling conventional batteries that contain a plurality of types of rare metals. This aspect is advantageous in that the environmental impact can be reduced.

In the positive electrode active material in the present invention, the total content of a Ni element and a Co element is more preferably 0.05% by mass or less, even more preferably 0.01% by mass or less, and even more preferably substantially zero. The reason for this is that the effects of the present invention become more remarkable. "Substantially zero" means below the limit of measurement when 0.5 g of a sample is weighed and dissolved in an acid solution to a constant volume of 25 ml and the solution is measured using ICP emission spectrometry.

The content of a Ni element and a Co element contained in the positive electrode active material can be measured by dissolving the positive electrode active material in acid and measuring this solution using ICP atomic emission spectrometry, for example.

Conventional positive electrode active materials used in lithium-ion batteries include lithium transition metal composite oxides called NCM, for example. NCM contains a manganese (Mn) element in addition to a nickel (Ni) element and a cobalt (Co) element. On the other hand, the positive electrode active material in the present invention is preferably such that the total content of a Ni element and a Co element is within a predetermined range and the content of a Mn element is also within a predetermined range. Specifically, in the positive electrode active material in the present invention, for example, the total content of a Ni element, a Co element, and a Mn element is preferably 0.1% by mass or less, more preferably 0.05% by mass or less, even more preferably 0.01% by mass or less, and even more preferably substantially zero. The reason for this is that the effects of the present invention become more remarkable. The definition of "substantially zero" may be similar to that described above, and thus a description thereof has been omitted.

In the positive electrode active material in the present invention, it is preferable to reduce not only the amount of a Ni element, a Co element, and a Mn element described above but also the amount of other rare metals (excluding the Li element), from the viewpoint of reducing the production cost, the recycling cost, and the environmental impact during recycling. Rare metals are defined by the Special Subcommittee on Comprehensive Measures for Rare Metals of the Mining Council of the Ministry of Economy, Trade and Industry of Japan as "31 types of ores whose existence on earth is rare or whose extraction is difficult for technical or economic reasons, but whose stable supply is important from a policy perspective because industrial demand currently exists (and is expected to exist), i.e., tungsten, cobalt, nickel, and rare earths (17 rare earth elements are collectively counted as one ore type)". Specifically, they include a lithium (Li) element, a beryllium (Be) element, a boron (B) element, a titanium (Ti) element, a vanadium (V) element, a chromium (Cr) element, a manganese (Mn) element, a cobalt (Co) element, a nickel (Ni) element, a gallium (Ga) element, a germanium (Ge) element, a selenium (Se) element, a rubidium (Rb) element, a strontium (Sr) element, a zirconium (Zr) element, a niobium (Nb) element, a molybdenum (Mo) element, a palladium (Pd) element, an indium (In) element, an antimony (Sb) element, a tellurium (Te) element, a cesium (Cs) element, a barium (Ba) element, a hafnium (Hf) element, a tantalum (Ta) element, a tungsten (W) element, a rhenium (Re) element, a platinum (Pt) element, a thallium (Tl) element, and a bismuth (Bi) element, and rare earth elements. The rare earth elements include a scandium (Sc) element, a yttrium (Y) element, and lanthanoid elements with the atomic number of 57 to 71. In the present invention, for example, the total content of these rare metals excluding the Li element is preferably 0.1% by mass or less, more preferably 0.05% by mass or less, even more preferably 0.01% by mass or less, and even more preferably substantially zero. The reason for this is that the effects of the present invention become more remarkable. The definition of "substantially zero" may be similar to that described above, and thus a description thereof has been omitted.

The positive electrode active material in the battery of the present invention preferably does not contain rare metals (but may contain a Li element), and is constituted by a Li element, a S element, and a P element as described above instead of rare metals (excluding the Li element). The positive electrode active material preferably contains a crystal phase with an argyrodite-type crystal structure. Whether or not a positive electrode active material contains a crystal phase with an argyrodite-type crystal structure can be determined by analyzing the positive electrode active material using an X-ray diffraction method. CuKα1 radiation can be used as the characteristic X-rays, for example.

The positive electrode active material containing a crystal phase with an argyrodite-type crystal structure may contain a halogen (X) element. Examples of the halogen (X) element may include at least one of a fluorine (F) element, a chlorine (Cl) element, a bromine (Br) element, and an iodine (I) element. From the viewpoint of improving the ion conductivity, it is particularly preferable to use a combination of a Cl element and a Br element as halogen elements.

The positive electrode active material containing a crystal phase with an argyrodite-type crystal structure is preferably a compound represented by Composition Formula (I): LiₐPS_{b}X_{c} (where X is at least one of a fluorine (F) element, a chlorine (Cl) element, a bromine (Br) element, and an iodine (I) element), for example, from the viewpoint of further improving the ion conductivity. X is preferably one or two of a Cl element and a Br element.

In Composition Formula (I) above, *a* indicating the molar ratio of the Li element is preferably 4.5 or more, more preferably 5.0 or more, and even more preferably 5.4 or more, for example. Furthermore, the above-mentioned *a* is preferably 8 or less, more preferably 7.5 or less, and even more preferably 7.0 or less, for example. If the *a* is within this range, the cubic argyrodite-type crystal structure at a temperature near room temperature (25°C) is stable, and the lithium ion conductivity can be increased.

In Composition Formula (I) above, b is a value indicating how small the content of the Li₂S component is relative to the stoichiometric composition. From the viewpoint of realizing a stable argyrodite-type crystal structure at a temperature near room temperature (25°C) and increasing the lithium ion conductivity, the b is preferably 3.5 or more, more preferably 4.0 or more, and even more preferably 4.4 or more, for example. On the other hand, the b is preferably 7.0 or less, more preferably 6.5 or less, and even more preferably 6.0 or less, for example.

In Composition Formula (I) above, c may be more than 0, 0.1 or more, or 0.2 or more, for example. On the other hand, the c is preferably 2.5 or less, more preferably 2.0 or less, even more preferably 1.6 or less, even more preferably less than 1.0, and even more preferably 0.8 or less, for example. The reason for this is that a high-capacity battery can be obtained.

The positive electrode active material preferably has peaks at positions 2θ = 25.5° ± 1.50° and 30.1° ± 1.50° in the X-ray diffraction pattern measured using CuKα1 radiation. These peaks are peaks derived from the argyrodite-type crystal phase.

The positive electrode active material more preferably has peaks at one or at least two positions selected from 2θ = 15.6° ± 1.50°, 17.9° ± 1.50°, 31.3° ± 1.50°, 44.7° ± 1.50°, 47.7° ± 1.50°, and 52.2° ± 1.50°, in addition to the positions 2θ = 25.5° ± 1.50° and 30.1° ± 1.50°, and even preferably has peaks at all positions of 2θ = 15.6° ± 1.50°, 17.9° ± 1.50°, 31.3° ± 1.50°, 44.7° ± 1.50°, 47.7° ± 1.50°, and 52.2° ± 1.50°, in addition to the positions 2θ = 25.5° ± 1.50° and 30.1° ± 1.50°, in the X-ray diffraction pattern measured using CuKα1 radiation. These peaks are peaks derived from the argyrodite-type crystal phase.

The positions of the peaks described above are expressed as median ± 1.50°, but are preferably expressed as median ± 1.00°, and more preferably expressed as median ± 0.50°.

The positive electrode in the battery of the present invention preferably contains a conductive material. From the viewpoint of improving the battery performance, the positive electrode preferably contains a composite material obtained by compositing a positive electrode active material and a conductive material. This composite material preferably includes: a main portion constituted by a compound containing a Li element, a S element, and a P element and containing a crystal phase with an argyrodite-type crystal structure (alternatively referred to simply as an "argyrodite-type compound" hereinafter); and a conductive portion dispersed on the surface of and/or inside the main portion and constituted by a conductive material, from the viewpoint of further improving the battery performance.

The main portion contains an argyrodite-type compound, and may further contain other materials or other components as necessary. For example, the main portion may be constituted by a single phase consisting of a crystal phase with an argyrodite-type crystal structure, or may have other phases in addition to the phase. For example, the main portion may contain a Li₂S phase, a Li₃PS₄ phase, a Li₄P₂S₆ phase, a LiCl phase, a LiBr phase, or the like, in addition to the crystal phase with an argyrodite-type crystal structure. In particular, if the main portion contains a Li₂S phase and the crystal phase with an argyrodite-type crystal structure, the capacity of the positive electrode active material increases, which is preferable.

The proportion of the crystal phase with an argyrodite-type crystal structure contained in the main portion may be 5% by mass or more, 10% by mass or more, or 20% by mass or more, of the total crystal phase constituting the main portion, for example. On the other hand, the proportion of the crystal phase with an argyrodite-type crystal structure contained in the main portion may be 50% by mass or less, 40% by mass or less, or 30% by mass or less, of the total crystal phase constituting the main portion, for example. If the proportion of the crystal phase with an argyrodite-type crystal structure is within this range, the lithium ion conductivity of the positive electrode active material in the present invention can be increased, as a result of which the rate characteristics can be improved in the battery of the present invention.

The main portion may contain a Li₂S phase in addition to the crystal phase with an argyrodite-type crystal structure. The proportion of the Li₂S phase contained in the main portion is preferably 10% by mass or more, more preferably 20% by mass or more, and even more preferably 50% by mass or more, of the total crystal phase constituting the main portion, for example. On the other hand, the proportion of the Li₂S phase contained in the main portion may be 95% by mass or less, 90% by mass or less, or 80% by mass or less, of the total crystal phase constituting the main portion, for example. If the proportion of the Li₂S phase is within this range, a large capacity of Li₂S can be expressed in the positive electrode active material in the present invention, as a result of which the charge-discharge capacity can be improved in the battery of the present invention.

The proportion of a crystal phase described above can be determined using an X-ray diffraction pattern, for example.

In addition to the other materials and other components mentioned above, the main portion may contain impurities to the extent that they have little adverse effect on the effects of the present invention, for example, in an amount of approximately less than 5% by mass, in particular less than 3% by mass.

The main portion containing the argyrodite-type compound may be in the form of particles, and the conductive portion containing the conductive material described above may be located on the surface of or inside the particles. As the conductive material, any material having electronic conductivity may be used without any particular limitation. Examples of the conductive material include various metallic materials and conductive non-metallic materials. Either of these metallic materials or conductive non-metallic materials may be used, or a combination of both may be used. Examples of the metallic materials include various noble metal elements such as a silver (Ag) element. The various transition metal elements may be a copper (Cu) element, an iron (Fe) element, or a tin (Sn) element, for example. These metal elements may be used alone or in a combination of two or more. The conductive material in the present invention is more preferably a transition metal element, specifically at least one of a Cu element, a Fe element, and a Sn element, for example.

Examples of the conductive non-metallic materials include carbon materials. The carbon materials may be graphite, acetylene black, carbon black, carbon nanofiber, carbon nanotubes, nanographene, or fullerene nanowhiskers, for example. These carbon materials may be used alone or in a combination of two or more. Of these carbon materials, it is preferable to use carbon black in terms of increasing the initial capacity and cycle characteristics of the battery. From the viewpoint of making this advantage more remarkable, the carbon black is preferably Ketjen black, more preferably furnace black, and even more preferably oil furnace black.

The conductive portion containing the various conductive materials mentioned above is preferably dispersed uniformly and in intimate contact with the surface or the inside of the main portion, because the conductive portion serves as an electron conduction path when lithium is desorbed and absorbed from the main portion.

The composite material obtained by compositing the positive electrode active material and the conductive material in the present invention is typically in the form of particles. From the viewpoint of uniformly dispersing the conductive portion containing the conductive material on the surface of or inside the main portion, the size of the conductive material is preferably smaller than that of the main portion. Specifically, when the particle diameter of the main portion is taken as D1 and the particle diameter of the conductive material is taken as D2, the value of D1/D2 is preferably 2 or more, more preferably 5 or more, and even more preferably 10 or more, for example. On the other hand, the value of D1/D2 is preferably 1000 or less, more preferably 500 or less, and even more preferably 10 or more and 100 or less, for example.

The particle diameter D1 of the main portion is preferably 0.1 µm or more, more preferably 0.2 µm or more, and even more preferably 0.5 µm or more, for example. On the other hand, D1 is preferably 20 µm or less, more preferably 10 µm or less, and even more preferably 5 µm or less, for example. The particle diameter D2 of the conductive portion is preferably 1 nm or more, more preferably 10 nm or more, and even more preferably 20 nm or more, for example. On the other hand, D2 is preferably 500 nm or less, more preferably 300 nm or less, and even more preferably 200 nm or less, for example.

The particle diameter of the main portion is the volume cumulative particle diameter D₅₀ at 50% cumulative volume as measured using the laser diffraction scattering particle size distribution method. Meanwhile, the particle diameter of the conductive portion is difficult to measure through laser diffraction scattering particle size distribution measurement when the conductive portion is dispersed inside particles of the main portion. Therefore, the average particle diameter is measured by directly observing the conductive portion dispersed inside the main portion using a SEM (Scanning Electron Microscope) or a TEM (Transmission Electron Microscope). For example, when the conductive material is carbon nanotubes or carbon nanofiber as described above, the fiber diameter refers to the diameter at the fiber cross section or the average value between the major and minor diameters.

The positive electrode active material is a material obtained by compositing the main portion and the conductive portion, that is, a composite material of particles containing the argyrodite-type compound constituting the main portion and the conductive material constituting the conductive portion. The "composite" state is preferably a state in which the conductive portion is dispersed on the surface of or inside the main portion integrally and inseparably in intimate contact with the main portion. In particular, from the viewpoint of further improving the battery performance of the present invention, the composite material is preferably a material obtained by compositing the positive electrode active material and the conductive material by applying mechanical energy.

The "composite" state is a state in which particles of the conductive material are inseparably dispersed on the surface of and/or inside particles containing the argyrodite-type compound, or a state in which particles containing the argyrodite-type compound constituting the main portion and particles of the conductive material constituting the conductive portion are bonded to each other through chemical reaction, for example.

The state in which "particles of the conductive material are inseparably dispersed on the surface of or inside particles of the compound constituting the main portion" means a state in which, when the active material of the present invention is observed using a scanning electron microscopy (SEM-EDS) equipped with an energy dispersive X-ray spectrometer to map the constituent elements (e.g., a sulfur element) of the compound constituting the main portion and the constituent elements of the conductive material constituting the conductive portion, the constituent elements (e.g., a sulfur element) of the compound constituting the main portion and the constituent elements of the conductive material constituting the conductive portion are seen to overlap each other, for example. Alternatively, this state means a state in which, when a cross-section of a positive electrode layer of a battery produced using the positive electrode active material in the present invention is observed, the constituent elements (e.g., a sulfur element) of the compound constituting the main portion and the constituent elements of the conductive material constituting the conductive portion are seen to overlap each other on the surface of or inside the active material. The state in which the main portion and the conductive portion are composited to each other through chemical reaction can be seen based on the presence or absence of C-S bonding using Raman spectroscopy or photoelectron spectroscopy, for example.

In the positive electrode active material, electrons are smoothly transferred between the outside of the active material and the main portion via the conductive portion, and thus conductivity and lithium ion desorption/absorption function are acquired. Furthermore, since a compound having a high lithium content and having an argyrodite-type crystal structure with high lithium ion conductivity is used for the main portion, the battery having the active material of the present invention will exhibit high capacity and high rate characteristics. In particular, the active material of the present invention is useful as a positive electrode active material of a lithium-ion battery. That is to say, compared with conventionally known sulfur-based positive electrode active materials such as elemental sulfur, lithium sulfide (Li₂S), a composite material thereof, or a metal sulfide, the active material of the present invention has superior conductivity and provides the desired battery performance.

In the positive electrode active material, the amount of conductive material with respect to 100 parts by mass of particles containing the argyrodite-type compound constituting the main portion is preferably 1 part by mass or more, more preferably 2 parts by mass or more, and even more preferably 5 parts by mass or more, for example. On the other hand, the amount of conductive material with respect to 100 parts by mass of particles containing the argyrodite-type compound constituting the main portion is preferably 50 parts by mass or less, more preferably 20 parts by mass or less, and even more preferably 10 parts by mass or less, for example. If the main portion and the conductive portion are within this range, the battery of the present invention exhibits remarkably high capacity and remarkably high rate characteristics.

In the positive electrode active material, the content of the lithium element in the argyrodite-type compound is preferably 10% by mass or more, more preferably 12% by mass or more, and even more preferably 15% by mass or more, for example. On the other hand, the content of the lithium element in the argyrodite-type compound is preferably 25% by mass or less, more preferably 23% by mass or less, and even more preferably 21% by mass or less, for example. If the content of the lithium element is set to this range, the capacity of the battery of the present invention can be further increased.

In the positive electrode active material, the lithium ion conductivity of the argyrodite-type compound contained in the active material is preferably 1×10⁻⁵ S/cm or more, more preferably 1×10⁻⁴ S/cm or more, and even more preferably 1×10⁻³ S/cm or more, for example. If the conductivity of the argyrodite-type compound is increased, the rate characteristics of the battery of the present invention can be further improved.

Next, a preferred method for producing a positive electrode active material used in the present invention will be described. This production method is mainly divided roughly into a first step of preparing particles containing an argyrodite-type compound constituting the main portion, and a second step of mixing the particles of the argyrodite-type compound and a conductive material, thereby compositing these materials. Hereinafter, these steps will be described.

In the first step, particles containing the argyrodite-type compound are prepared. The argyrodite-type compound can be produced using a known method. For example, it is possible to obtain particles of the argyrodite-type compound, by mixing and firing a lithium sulfide (Li₂S) powder, a phosphorus pentasulfide (P₂S₅) powder, a lithium chloride (LiCl) powder, and a lithium bromide (LiBr) powder. For example, a ball mill, a bead mill, a homogenizer, or the like is preferably used to mix these powders.

After the powders are mixed as described above, the mixed powder is dried as necessary, fired in an inert atmosphere or while hydrogen sulfide (H₂S) gas is circulated, crushed or milled as necessary, and then sieved to obtain the argyrodite-type compound.

In the case of performing firing under an atmosphere containing hydrogen sulfide gas, the firing temperature is preferably 450°C or higher, and even more preferably 550°C or higher, for example. On the other hand, the firing temperature is preferably 700°C or lower, more preferably 650°C or lower, and even more preferably 600°C or lower, for example.

Meanwhile, in the case of performing firing in an inert atmosphere, the firing temperature is preferably 450°C or higher, for example. On the other hand, the firing temperature is preferably 650°C or lower, more preferably 600°C or lower, and even more preferably 550°C or lower, for example.

It is also possible to produce particles of the argyrodite-type compound constituting the main portion, by amorphizing the raw material powder through mechanical milling and then crystallizing the amorphized raw material powder through heat treatment as necessary. In this case, as long as the raw material powder can be sufficiently mixed and amorphized, there is no particular limitation on the treatment apparatus and treatment conditions. In particular, when a planetary ball mill is used, the container containing the raw material powder rotates and revolves at high speed, and thus high impact energy is generated between the raw material powder and balls, which are milling media that are placed in the container together with the raw material powder, enabling efficient and uniform amorphization of the raw material powder. The mechanical milling method may be either dry or wet.

The treatment conditions in mechanical milling may be set as appropriate according to a treatment apparatus used, and, for example, treatment for 0.1 to 100 hours enables more efficient and uniform amorphization of the raw material powder. The balls used as the milling media are preferably made of ZrO₂, Al₂O₃, Si₃N₄ (silicon nitride), or WC (tungsten carbide), and preferably have a ball diameter of approximately 0.2 mm or more and 10 mm or less.

The raw powder amorphized through mechanical milling is crystallized through heat treatment under the same firing conditions as described above to obtain the argyrodite-type compound. The raw material powder that has undergone mechanical milling is more uniformly mixed than the raw material powder obtained by ordinary milling and mixing, and thus the heat treatment temperature can be further reduced.

It is also possible to produce particles of the argyrodite-type compound constituting the main portion, by a liquid phase method with an organic solvent. For example, sulfides and halides serving as raw materials of the argyrodite-type compound are dissolved in a solvent such as tetrahydrofuran or ethanol, and the argyrodite-type compound is precipitated using the solvent as a reaction field. Alternatively, the argyrodite-type compound synthesized in advance using another method is dissolved in a solvent such as ethanol and then re-precipitated to obtain the argyrodite-type compound. This sort of liquid phase method can produce particles of the argyrodite-type compound in a shorter time and with less energy than other methods, and it is also relatively easy to reduce the particle size of the particles.

Once the main portion constituted by particles of the argyrodite-type compound is obtained in this manner, the particle size is preferably regulated such that this main portion has an appropriate particle diameter. The preferred particle diameter of the main portion may be similar to that described above, and thus a description thereof has been omitted.

Next, the main portion and the conductive material are mixed and composited. The conductive material used may be similar to that described above, and thus a description thereof has been omitted.

The main portion and the conductive material are composited by applying mechanical energy to particles of the argyrodite-type compound constituting the main portion and particles of the conductive material, for example. For this purpose, it is preferable to apply compression/impact forces or shear/friction forces to the main portion and the conductive material in a mixed state.

In the case of compositing the main portion and the conductive material by applying mechanical energy such as compression/impact forces or shear/friction forces to them in a mixed state, it is preferable to employ an apparatus used primarily when stirring, mixing, kneading, granulating, milling, dispersing, and/or surface modifying powders, for example. For example, a planetary ball mill, a ball mill, a jet mill, a bead mill, an agitation-type mill, a vibration mill, a hammer mill, a roller mill, an atomizer, or the like may be used. The main type of mechanical energy that can be imparted using these apparatuses differs between apparatuses, and, for example, when using a planetary ball mill, the main portion and the conductive material in a mixed state can be composited by applying mainly compression/impact forces to them. The centrifugal acceleration obtained during apparatus rotation is not particularly limited as long as it is sufficient to composite the main portion and the conductive portion, but the centrifugal acceleration is preferably 10 G or more, more preferably 15 G or more, and even more preferably 18 G or more, for example. Also, the centrifugal acceleration is preferably 40 G or less, more preferably 30 G or less, and even more preferably 25 G or less, for example. If the centrifugal acceleration is within this range, the main portion and the conductive material can be more sufficiently composited.

It is also possible to use the aforementioned liquid phase method to composite the main portion and the conductive material. In this case, the conductive material is dispersed in an organic solvent in advance, and then the raw materials for particles of the argyrodite-type compound or the argyrodite-type compound itself is placed in the organic solvent to allow the particles to precipitate on the surface of or inside the conductive material, resulting in composite formation. With compositing using this sort of method, it is possible to further reduce the particle size of the composite particle.

The positive electrode active material can be mixed with a solid electrolyte, a conductive material, a binder, and the like to form a positive electrode material mixture. Details of the solid electrolyte will be described later.

The active material contained in the positive electrode material mixture may be the above-described positive electrode active material alone, or may be a combination of the positive electrode active material and other active materials. Examples of other active materials include known elemental sulfur and active materials containing sulfur. The proportion of the above-described positive electrode active material in the positive electrode material mixture may be 20% by mass or more, 30% by mass or more, or 40% by mass or more, for example. On the other hand, the proportion of the above-described positive electrode active material in the positive electrode material mixture may be 70% by mass or less, or 60% by mass or less, for example.

In order to make the desired effects more remarkable, the battery of the present invention preferably has an interface at which the positive electrode active material and the solid electrolyte are in contact with each other. The state in which "the positive electrode active material and the solid electrolyte are in contact with each other" encompasses both a state in which the positive electrode active material and the solid electrolyte contained in the positive electrode are in contact with each other and a state in which the positive electrode active material contained in the positive electrode and the solid electrolyte contained in the solid electrolyte layer are in contact with each other.

The negative electrode in the battery of the present invention contains a negative electrode active material. The negative electrode active material may be similar to those used in ordinary solid-state batteries. Specific examples of the negative electrode active material include materials that absorb and release lithium ions, such as Li metal, carbon materials, silicon, silicon oxide compounds such as SiO, tin compounds, and lithium titanate, and other known materials. The carbon material may be those obtained by sintering organic high molecular compounds such as polyacrylonitrile, phenol resin, phenol novolac resin, or cellulose, artificial graphite, or natural graphite, for example.

In the battery of the present invention, the solid electrolyte layer arranged between the positive electrode and the negative electrode contains a solid electrolyte. The solid electrolyte preferably has ion conductivity such as lithium ion conductivity. Specific examples of the solid electrolyte include: inorganic solid electrolytes such as sulfide solid electrolytes, oxide solid electrolytes, nitride solid electrolytes, and halide solid electrolytes; hydride solid electrolytes; and organic polymer electrolytes such as polymer electrolytes. From the viewpoint of making the effects of the present invention more remarkable, the solid electrolyte is preferably a sulfide solid electrolyte. The sulfide solid electrolyte may be similar to those used in ordinary solid-state batteries. The sulfide solid electrolyte may contain a Li element and a S element and have lithium ion conductivity, for example.

The sulfide solid electrolyte may be any of a crystalline material, a glass ceramic, and glass. The sulfide solid electrolyte may contain a Li element, a S element, and a P element and contain a crystal phase with an argyrodite-type crystal structure. Examples of the sulfide solid electrolyte include compounds represented by Li₂S-P₂S₅, Li₂S-P₂S₅-LiX ("X" indicates one or more halogen elements), Li₂S-P₂S₅-P₂O₅, Li₂S-Li₃PO₄-P₂S₅, Li₃PS₄, Li₄P₂S₆, Li₁₀ GeP₂S₁₂, Li_{3.25} Ge_{0.25}P_{0.75}S₄, Li₇P₃S₁₁, Li_{3.25}P_{0.95}S₄, and LiₐPS_{b}X_{c} ("X" indicates one or more halogen elements, *a* indicates a number of 3.0 to 9.0, b indicates a number of 3.5 to 6.0, and c indicates a number of 0.1 to 3.0). Other examples include sulfide solid electrolytes described in WO2013/099834A1 and WO2015/001818 A1.

The battery of the present invention with the above-described configuration is preferably a lithium-ion battery, and more preferably a lithium-sulfur battery. The battery of the present invention is preferably a solid-state battery having a solid electrolyte layer, and more preferably an all-solid-state battery. The battery of the present invention may be either a primary battery or a secondary battery, but it is preferably a secondary battery, and more preferably a lithium secondary battery. The term "lithium secondary battery" is meant to broadly encompass secondary batteries that are charged and discharged by lithium ions moving between the positive and negative electrodes. The term "solid-state battery" is meant to encompass solid-state batteries that do not contain any liquid or gel-like substance as an electrolyte, as well as those that contain 50% by mass or less, 30% by mass or less, or 10% by mass or less of liquid or gel-like substance as an electrolyte, for example.

### Examples

Hereinafter, the present invention will be described in more detail by means of the following examples. However, the scope of the invention is not limited to these examples. Unless otherwise specified, "%" and "parts" mean "% by mass" and "parts by mass" respectively.

### Example 1

A positive electrode active material was produced using the following method.

A lithium sulfide (Li₂S) powder, a phosphorus pentasulfide (P₂S₅) powder, and a lithium chloride (LiCl) powder were each weighed to obtain a composition Li_{5.8}PS_{4.8}Cl_{1.2} in a total amount of 2 g, placed together with ZrO₂ balls with a diameter of diameter of ϕ5 mm into a ZrO₂ container, and mixed and milled using a planetary ball mill (P-7 manufactured by Fritsch) at 500 rpm for 20 hours to prepare a mixed powder. This mixed powder was filled into a carbon container, heated in a tubular electric furnace at a temperature increase rate of 200°C/h while hydrogen sulfide gas (H₂S, 100% purity) was circulated at 1 L/min, and fired at 500°C for 4 hours. Subsequently, the sample was crushed in a mortar, milled in a ball mill, and sieved through a sieve with a 53 µm aperture to obtain a powder compound with a particle diameter D₅₀ of 12 µm. Subsequently, the sieved powder and heptane serving as a solvent were placed together with ZrO₂ balls with a diameter of ϕ2 mm into a ZrO₂ container, and processed using a planetary ball mill (P-7 manufactured by Fritsch) at 150 rpm for 3 hours to prepare a crushed powder with a particle diameter D₅₀ of 3.5 µm.

Ketjen black (registered trademark) EC300, which is conductive carbon black manufactured by Lion Specialty Chemicals Co., Ltd., was used as the conductive material. This conductive material had a particle diameter D₅₀ of 0.04 µm. 20 parts of the conductive material was used with respect to 100 parts of the compound, and the mixture was mixed and composited using a planetary ball mill (P-7 manufactured by Fritsch) at 500 rpm (centrifugal acceleration 19.1 G) for 10 hours. Subsequently, the sample was crushed in a mortar, and sieved through a sieve with a 53 µm aperture to obtain particles of the positive electrode active material with a particle diameter D₅₀ of 3.2 µm. XRD measurement using CuKα1 radiation confirmed that this compound had a crystal phase with an argyrodite-type crystal structure.

All of the above operations were performed in a glove box purged with well-dried Ar gas (with a dew point of -60°C or lower).

Then, a solid electrolyte was produced using the following method.

A lithium sulfide (Li₂S) powder, a phosphorus pentasulfide (P₂S₅) powder, a lithium chloride (LiCl) powder, and a lithium bromide (LiBr) powder were each weighed to obtain a composition Li_{5.4}PS_{4.4}Cl_{0.8}Br_{0.8} in a total amount of 2 g, and mixed and milled using a planetary ball mill (P-7 manufactured by Fritsch) at 100 rpm for 10 hours to prepare a mixed powder. This mixed powder was filled into a carbon container, heated in a tubular electric furnace at a temperature increase rate of 200°C/h while hydrogen sulfide gas (H₂S, 100% purity) was circulated at 1 L/min, and fired at 500°C for 4 hours. Subsequently, the sample was sieved through a sieve with a 53 µm aperture to obtain a powder compound with a particle diameter D₅₀ of 10 µm. The obtained sieved powder and heptane serving as a solvent were placed together with ZrO₂ balls with a diameter of ϕ2 mm into a ZrO₂ container, and processed using a planetary ball mill (P-7 manufactured by Fritsch) at 100 rpm for 3 hours to prepare a crushed powder with a particle diameter D₅₀ of 3.0 µm. Subsequently, the crushed powder, heptane serving as a solvent, and butyl acetate serving as a dispersant were placed together with ZrO₂ balls with a diameter of ϕ0.8 mm into a ZrO₂ container, and processed using a planetary ball mill (P-7 manufactured by Fritsch) at 100 rpm for 3 hours to prepare a milled powder with a particle diameter D₅₀ of 0.7 µm. XRD measurement using CuKα1 radiation confirmed that this compound had a crystal phase with an argyrodite-type crystal structure.

Graphite with particle diameter D₅₀ of 20 µm was used as the negative electrode active material.

The positive electrode active material powder and the milled powder of the solid electrolyte described above were mixed in a mortar at a mass ratio of 60:40 to prepare a positive electrode material mixture.

The negative electrode active material powder and the milled powder of the solid electrolyte described above were mixed in a mortar at a mass ratio of 50:50 to prepare a negative electrode material mixture.

The positive electrode material mixture and the negative electrode material mixture described above were prepared in a glove box purged with well-dried Ar gas (with a dew point of -60°C or lower).

The bottom opening of a cylindrical polypropylene container (with an opening diameter of 10.5 mm and a height of 18 mm) that was open at the top and bottom was closed with a negative electrode (made of SUS), the crushed powder of the solid electrolyte was placed thereon, the container was closed with a positive electrode (made of SUS), and then uniaxial pressing was performed at 100 MPa to form a solid electrolyte layer. Next, the positive electrode was once removed, a positive electrode material mixture was placed on the solid electrolyte layer, the container was closed again with the positive electrode, after which the cylindrical container was inverted, the negative electrode was removed, a negative electrode material mixture was placed on the solid electrolyte layer, the container was closed again with the negative electrode, and then uniaxial pressing was performed at 560 MPa to prepare a solid-state battery cell in which a positive electrode layer, a solid electrolyte layer, and a negative electrode layer were stacked. Finally, the positive and negative electrodes were clamped using a C-clamp at a load of 6 N·m to fabricate an all-solid-state battery cell in which a positive electrode layer, a solid electrolyte layer, and a negative electrode layer were stacked. The positive electrode layer had a thickness of about 40 µm, the solid electrolyte layer had a thickness of about 600 µm, and the negative electrode layer had a thickness of about 60 µm. The all-solid-state battery cell was fabricated in a glove box purged with argon gas with a dew point of -60°C. The capacity of the fabricated all-solid-state battery was 2.0 mAh on a positive electrode basis.

### Example 2

A positive electrode active material was produced using the following method. Carbon nanotubes (with a fiber diameter of 150 nm) (VGCF (registered trademark) -H manufactured by Showa Denko K.K.) were used as the conductive material, instead of Ketjen black (registered trademark) used in Example 1. A positive electrode active material was obtained in a similar way to that of Example 1, except for this aspect.

A solid electrolyte was produced using the following method.

A lithium sulfide (Li₂S) powder, a phosphorus pentasulfide (P₂S₅) powder, and a lithium chloride (LiCl) powder were each weighed to obtain a composition Li_{5.8}PS_{4.8}Cl_{1.2} in a total amount of 2 g, and mixed and milled using a planetary ball mill (P-7 manufactured by Fritsch) at 100 rpm for 10 hours to prepare a mixed powder. This mixed powder was filled into a carbon container, heated in a tubular electric furnace at a temperature increase rate of 200°C/h while hydrogen sulfide gas (H₂S, 100% purity) was circulated at 1 L/min, and fired at 500°C for 4 hours. Subsequently, the sample was crushed in a mortar, and sieved through a sieve with a 53 µm aperture to obtain a powder compound with a particle diameter D₅₀ of 11 µm. The obtained powder was sieved in a similar way to that of Example 1 to prepare a milled powder with a particle diameter D₅₀ of 0.8 µm.

XRD measurement using CuKα1 radiation confirmed that this compound had a crystal phase with an argyrodite-type crystal structure.

Silicon with a particle diameter D₅₀ of 2.5 µm was used as the negative electrode active material.

A positive electrode material mixture was prepared in a similar way to that of Example 1, except that the above-described positive electrode active material and a milled powder of the solid electrolyte were used.

The above-described negative electrode active material powder, the milled powder of the solid electrolyte, and carbon nanotubes (with a fiber diameter of 150 nm) (VGCF (registered trademark) -H) were mixed in a mortar at a mass ratio of 53:42:5 to prepare a negative electrode material mixture.

An all-solid-state battery was fabricated in a similar way to that of Example 1, using the above-described materials.

### Example 3

A positive electrode active material was produced using the following method.

A lithium sulfide (Li₂S) powder, a phosphorus pentasulfide (P₂S₅) powder, a lithium chloride (LiCl) powder, and a lithium bromide (LiBr) powder were each weighed to obtain a composition Li_{5.4}PS_{4.4}Cl_{0.8}Br_{0.8} in a total amount of 2 g, and mixed and milled using a planetary ball mill (P-7 manufactured by Fritsch) at 100 rpm for 10 hours to prepare a mixed powder. This mixed powder was filled into a carbon container, heated in a tubular electric furnace at a temperature increase rate of 200°C/h while hydrogen sulfide gas (H₂S, 100% purity) was circulated at 1 L/min, and fired at 450°C for 4 hours. Subsequently, the sample was sieved through a sieve with a 53 µm aperture to obtain a powder compound with a particle diameter D₅₀ of 9 µm. The obtained powder and heptane serving as a solvent were placed together with ZrO₂ balls with a diameter of ϕ2 mm into a ZrO₂ container, and processed using a planetary ball mill (P-7 manufactured by Fritsch) at 100 rpm for 3 hours to prepare a crushed powder with a particle diameter D₅₀ of 2.5 µm.

Carbon nanotubes used in Example 2 (with a fiber diameter of 150 nm) (VGCF (registered trademark) -H manufactured by Showa Denko K.K.) were used as the conductive material. 20 parts of the conductive material was used with respect to 100 parts of the compound.

A positive electrode active material was obtained in a similar way to that of Example 1, except for this aspect. XRD measurement using CuKα1 radiation confirmed that this compound had a crystal phase with an argyrodite-type crystal structure.

A mixture of graphite used in Example 1 and SiO with a particle diameter D₅₀ of 5 µm was used as the negative electrode active material. The graphite and the SiO were mixed at a mass ratio of 85.5:14.5. The negative electrode active material powder and the milled powder of the solid electrolyte used in Example 1 were mixed in a mortar at a mass ratio of 50:50 to prepare a negative electrode material mixture.

The solid electrolyte and the positive electrode material mixture were prepared in a similar way to that of Example 1. An all-solid-state battery was fabricated in a similar way to that of Example 1, using the above-described materials.

### Example 4

A positive electrode active material was produced using the following method.

A lithium sulfide (Li₂S) powder and a phosphorus pentasulfide (P₂S₅) powder were each weighed to obtain a composition Li₇PS₆ in a total amount of 2 g, and mixed and milled using a planetary ball mill (P-7 manufactured by Fritsch) at 500 rpm for 20 hours to prepare a mixed powder. This mixed powder was filled into a carbon container, heated in a tubular electric furnace at a temperature increase rate of 200°C/h while Ar gas (100% purity) was circulated at 1 L/min, and fired at 600°C for 4 hours. Subsequently, the sample was crushed in a mortar, and sieved through a sieve with a 53 µm aperture to obtain a powder compound with a particle diameter D₅₀ of 10 µm. The obtained powder and heptane serving as a solvent were placed together with ZrO₂ balls with a diameter of ϕ2 mm into a ZrO₂ container, and processed using a planetary ball mill (P-7 manufactured by Fritsch) at 100 rpm for 3 hours to prepare a crushed powder with a particle diameter D₅₀ of 3.0 µm. The sample was milled in a ball mill, and sieved through a sieve with a 53 µm aperture to obtain a powder compound with a particle diameter D₅₀ of 4.8 µm.

Ketjen black (registered trademark) EC300 used in Example 1 was used as the conductive material. 20 parts of the conductive material was used with respect to 100 parts of the compound.

A positive electrode active material was obtained in a similar way to that of Example 1, except for this aspect. XRD measurement using CuKα1 radiation confirmed that this compound had a crystal phase with an argyrodite-type crystal structure.

Metallic lithium with a thickness of 100 µm was used as the negative electrode active material.

The solid electrolyte and the positive electrode material mixture was prepared in a similar way to that of Example 1.

An all-solid-state battery was produced using these materials as follows. The bottom opening of a cylindrical polypropylene container (with an opening diameter of 10.5 mm and a height of 18 mm) that was open at the top and bottom was closed with a negative electrode (made of SUS), the crushed powder of the solid electrolyte was placed thereon, the container was closed with a positive electrode (made of SUS), and then uniaxial pressing was performed at 200 MPa to form a solid electrolyte layer. Next, the positive electrode was once removed, a positive electrode material mixture powder was placed on the solid electrolyte layer, the container was closed again with the positive electrode, and then uniaxial pressing was performed at 560 MPa to stack the positive electrode layer and the solid electrolyte layer. Subsequently, the cylinder was inverted, the negative electrode was once removed, Li foil was placed on the solid electrolyte layer, the container was closed again with the negative electrode, and finally the positive and negative electrodes were clamped using a C-clamp at a load of 6 N·m to fabricate an all-solid-state battery cell in which a positive electrode layer, a solid electrolyte layer, and a negative electrode layer were stacked. The positive electrode layer had a thickness of about 40 µm, the solid electrolyte layer had a thickness of about 600 µm, and the negative electrode layer had a thickness of about 100 µm. The all-solid-state battery cell was fabricated in a glove box purged with argon gas with a dew point of -60°C. The capacity of the fabricated all-solid-state battery was 2.0 mAh on a positive electrode basis.

### Example 5

3LiBH₄-LiI was used as the solid electrolyte. This solid electrolyte was prepared as follows.

A lithium borohydride (LiBH₄) powder and a lithium iodide (LiI) powder were each weighed to obtain a composition 3LiBH₄-LiI in a total amount of 2 g, and subjected to mechanical milling using a planetary ball mill (P-7 manufactured by Fritsch) at 500 rpm for 10 hours to prepare a 3LiBH₄-LiI powder. Subsequently, the sample was crushed in a mortar, and sieved through a sieve with a 53 µm aperture to obtain a powder compound with a particle diameter D₅₀ of 12 µm. The obtained sieved powder and heptane serving as a solvent were placed together with ZrO₂ balls with a diameter of ϕ2 mm into a ZrO₂ container, and processed using a planetary ball mill (P-7 manufactured by Fritsch) at 100 rpm for 3 hours to prepare a crushed powder with a particle diameter D₅₀ of 6.4 µm.

A positive electrode active material used was the same as in Example 1. The positive electrode active material powder and the crushed powder of the above-described solid electrolyte were mixed in a mortar at a mass ratio of 75:25 to prepare a positive electrode material mixture. Furthermore, a negative electrode active material used was the same as in Example 4.

An all-solid-state battery was fabricated in a similar way to that of Example 4, using the above-described materials.

### Example 6

An all-solid-state battery was fabricated in a similar way to that of Example 1, except that a positive electrode active material used was the same as in Example 2.

### Example 7

A lithium sulfide (Li₂S) powder and a phosphorus pentasulfide (P₂S₅) powder were each weighed to obtain a composition Li_{6.6}PS_{5.6}Cl_{0.4} in a total amount of 2 g, and mixed and milled using a planetary ball mill (P-7 manufactured by Fritsch) at 500 rpm for 20 hours to prepare a mixed powder. This mixed powder was filled into a carbon container, heated in a tubular electric furnace at a temperature increase rate of 200°C/h while Ar gas (100% purity) was circulated at 1 L/min, and fired at 550°C for 4 hours. Subsequently, the sample was crushed in a mortar, and sieved through a sieve with a 53 µm aperture to obtain a powder compound with a particle diameter D₅₀ of 9 µm. The obtained powder and heptane serving as a solvent were placed together with ZrO₂ balls with a diameter of ϕ2 mm into a ZrO₂ container, and processed using a planetary ball mill (P-7 manufactured by Fritsch) at 100 rpm for 3 hours to prepare a crushed powder with a particle diameter D₅₀ of 3.0 µm. The sample was milled in a ball mill, and sieved through a sieve with a 53 µm aperture to obtain a powder compound with a particle diameter D₅₀ of 4.8 µm.

Ketjen black (registered trademark) EC300 used in Example 1 was used as the conductive material. 20 parts of the conductive material was used with respect to 100 parts of the compound.

A positive electrode active material was obtained in a similar way to that of Example 1, except for this aspect. XRD measurement using CuKα1 radiation confirmed that this compound had a crystal phase with an argyrodite-type crystal structure.

A solid electrolyte, a negative electrode active material, and a negative electrode material mixture used were the same as in Example 2. A positive electrode material mixture was prepared in a similar way to that of Example 2, and an all-solid-state battery was fabricated in a similar way to that of Example 2.

### Comparative Example 1

A LiNi_{0.6}Co_{0.2}Mn_{0.2}O₂ (alternatively referred to as "NCM" hereinafter) powder (D₅₀ = 4.2 µm) coated with an Nb material was used instead of the positive electrode active material used in Example 1. The positive electrode active material powder, the milled powder of the solid electrolyte used in Example 1, and carbon nanotubes (with a fiber diameter of 150 nm) (VGCF (registered trademark) -H manufactured by Showa Denko K.K.) serving as a conductive material were mixed in a mortar at a mass ratio of 60:37:3 to prepare a positive electrode material mixture powder for the positive electrode layer. An all-solid-state battery was obtained in a similar way to that of Example 1, except for this aspect.

### Comparative Example 2

A spinel-type lithium manganese nickel-containing composite oxide (LiMn_{1.5}Ni_{0.5}O₄, alternatively referred to as "LMNO" hereinafter) powder (D₅₀ = 4.1 µm) coated with an Nb material was used instead of the positive electrode active material used in Example 1. The positive electrode active material powder, the milled powder of the solid electrolyte used in Example 1, and carbon nanotubes (VGCF (registered trademark) -H manufactured by Showa Denko K.K.) serving as a conductive material were mixed in a mortar at a mass ratio of 60:30:10 to prepare a positive electrode material mixture powder for the positive electrode layer. An all-solid-state battery was obtained in a similar way to that of Example 1, except for this aspect.

### Comparative Example 3

A positive electrode active material used was the same as in Comparative Example 1. A solid electrolyte used was the same as in Example 1, and a negative electrode active material used was the same as in Example 2. A positive electrode material mixture was prepared in a similar way to that of Comparative Example 1. An all-solid-state battery was obtained in a similar way to that of Example 2, except for these aspects.

### Comparative Example 4

A lithium sulfide (Li₂S) powder and a phosphorus pentasulfide (P₂S₅) powder were each weighed to obtain a composition Li₂S:P₂S₅ = 75:25 in a total amount of 2 g, and subjected to mechanical milling using a planetary ball mill (P-7 manufactured by Fritsch) at 500 rpm for 30 hours to prepare a powder of Li₂S:P₂S₅ = 75:25. Subsequently, the sample was crushed in a mortar, and sieved through a sieve with a 53 µm aperture to obtain a powder compound with a particle diameter D₅₀ of 10 µm. The obtained powder and heptane serving as a solvent were placed together with ZrO₂ balls with a diameter of ϕ5 mm into a ZrO₂ container, and processed using a planetary ball mill (P-7 manufactured by Fritsch) at 100 rpm for 3 hours to prepare a crushed powder with a particle diameter D₅₀ of 5.8 µm.

Ketjen black (registered trademark) EC300 used in Example 1 was used as the conductive material. 20 parts of the conductive material was used with respect to 100 parts of the compound.

A positive electrode active material and a positive electrode material mixture were obtained in a similar way to that of Example 2, except for these aspects.

A solid electrolyte used was the same as Example 2. A negative electrode active material used was the same as Example 2, and a negative electrode material mixture was prepared in a similar way to that of Example 2. An all-solid-state battery was fabricated in a similar way to that of Example 2, except that the above-described materials were used.

### Evaluation

The proportions of a Ni element, a Co element, and a Mn element contained in the positive electrode active materials obtained in the examples and comparative examples were measured. The all-solid-state batteries obtained in the examples and comparative examples were connected to a charge-discharge measurement device in an environmental test chamber kept at 25°C or 120°C, and the initial capacity and the cycle characteristics were measured in the following manner. Table 1 below shows the results.

### Initial Discharge Voltage and Capacity

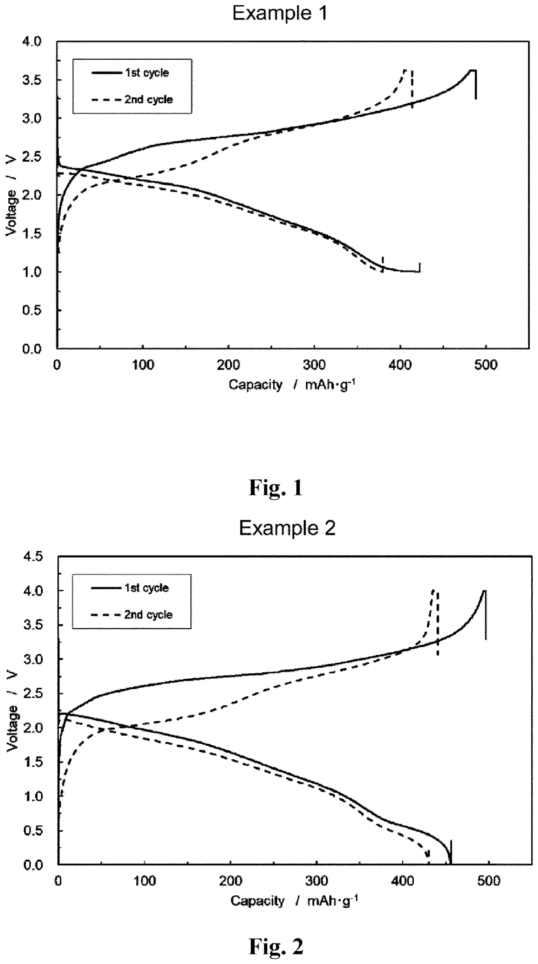

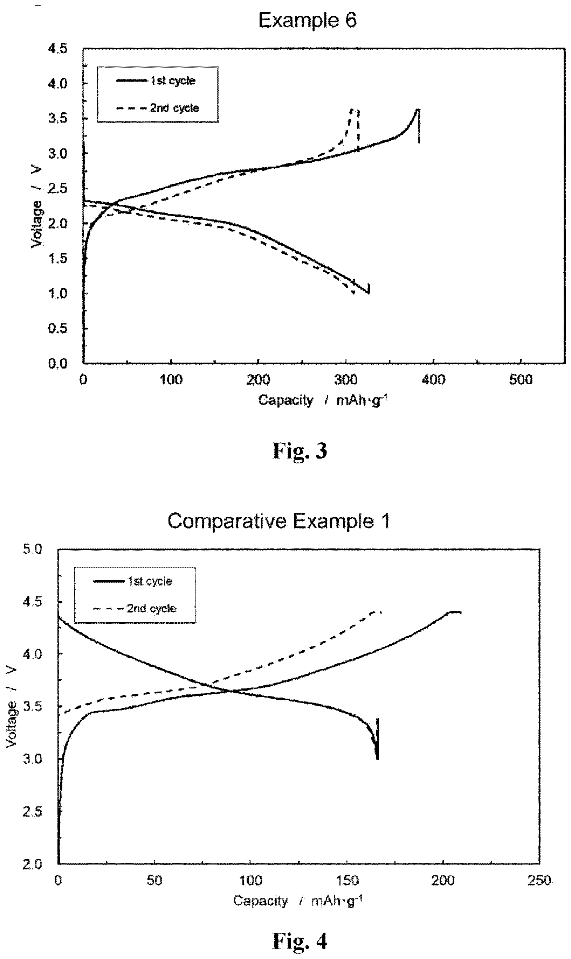

The all-solid-state batteries using a positive electrode active material whose main portion was a compound having an argyrodite-type crystal structure with a current of 2.0 mA at the 1C rate during charge and discharge were charged at 0.03 C using the CC-CV method and discharged at 0.03 C using the CC method in the initial charge and discharge (first cycle), for the purpose of efficiently desorbing and absorbing lithium ions contained in the positive electrode active material. In the second and subsequent cycles, the batteries were charged at 0.1 C using the CC-CV method and discharged at 0.1 C using the CC method. On the other hand, the all-solid-state batteries using the positive electrode active materials used in Comparative Examples 1 to 3 were charged at 0.1 C using the CC-CV method and discharged at 0.1 C using the CC method from the first cycle because lithium ions contained in the positive electrode active materials can be efficiently desorbed and absorbed. Since the cutoff voltage differs according to the combination of the positive electrode active material and the negative electrode active material used in an all-solid-state battery, the cutoff voltage was set according to the combination of the positive electrode active material and the negative electrode active material used in each of the all-solid-state batteries of the examples and comparative examples as shown in Table 1. The average discharge voltage in the second cycle was taken as the initial discharge voltage, and the discharge capacity therein as the initial discharge capacity. Figs. 1 to 5 show initial charge-discharge curves of the all-solid-state batteries fabricated in Examples 1, 2, and 6 and Comparative Examples 1 and 4.

### Cycle Characteristics

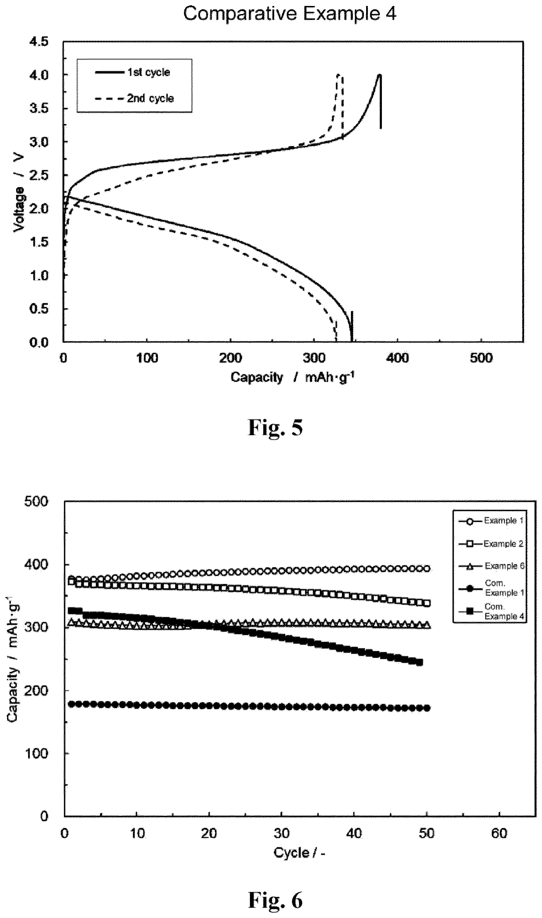

Charging and discharging were performed up to 50 cycles using the method described above, and the percentage of the discharge capacity at the 50^{-th} cycle to the initial discharge capacity at the second cycle was calculated as the capacity retention percentage. Fig. 6 shows cycle characteristics of the all-solid-state batteries fabricated in Examples 1, 2, and 6 and Comparative Examples 1 and 4.

**Table 1**

| | Positive electrode active material | Solid electrolyte | Negative electrode active material | Cutoff voltage | | Evaluation temperature [°C] | Content of rare metal in positive electrode active material [mass%] | | | Initial average discharge voltage [V] | Initial discharge capacity [mAh/g] | Cycle characteristics (capacity retention percentage) [%] |
|---|---|---|---|---|---|---|---|---|---|---|---|---|
| | | | | Charge [V] | Discharge [V] | | Ni | Co | Mn | | | |
| Ex. 1 | Li_{5.8}PS_{4.8}Cl_{1.2} Ketjen black composite material | Li_{5.4}PS_{4.4}Cl_{0.8}Br_{0.8} | Graphite | 3.5 | 1.0 | 25.0 | 0 | 0 | 0 | 1.78 | 379.7 | 104.5 |
| Ex. 2 | Li_{5.8}PS_{4.8}Cl_{1.2} carbon nanotube composite material | Li_{5.8}PS_{4.8}Cl_{1.2} | Silicon | 4.0 | 0.0 | 25.0 | 0 | 0 | 0 | 1.19 | 430.7 | 90.8 |
| Ex. 3 | Li_{5.4}PS_{4.4}Cl_{0.8}Br_{0.8} carbon nanotube composite material | Li_{5.4}PS_{4.4}Cl_{0.8}Br_{0.8} | Graphite/SiO | 3.6 | 1.0 | 25.0 | 0 | 0 | 0 | 1.75 | 273.2 | 96.1 |
| Ex. 4 | Li₇PS₆ Ketjen black composite material | Li_{5.4}PS_{4.4}Cl_{0.8}Br_{0.8} | Lithium | 3.6 | 1.0 | 25.0 | 0 | 0 | 0 | 1.66 | 820.2 | 82.1 |
| Ex. 5 | Li_{5.8}PS_{4.8}Cl_{1.2} Ketjen black composite material | 3LiBH₄-LiI | Lithium | 3.5 | 1.0 | 120.0 | 0 | 0 | 0 | 1.58 | 518.3 | 80.0 |
| Ex. 6 | Li_{5.8}PS_{4.8}Cl_{1.2} carbon nanotube composite material | Li_{5.4}PS_{4.4}Cl_{0.8}Br_{0.8} | Graphite | 3.5 | 1.0 | 25.0 | 0 | 0 | 0 | 1.74 | 309.2 | 98.5 |
| Ex. 7 | Li_{6.6}PS_{5.6}Cl_{0.4} Ketjen black composite material | Li_{5.8}PS_{4.8}Cl_{1.2} | Silicon | 4.0 | 1.0 | 25.0 | 0 | 0 | 0 | 1.23 | 309.2 | 90.1 |
| Com. Ex. 1 | LiNi_{0.6}Co_{0.2}Mn_{0.2}O₂ (NCM) | Li_{5.4}PS_{4.4}Cl_{0.8}Br_{0.8} | Graphite | 4.4 | 3.0 | 25.0 | 36.3 | 12.2 | 11.3 | 3.72 | 165.6 | 96.2 |
| Com. Ex. 2 | LiMn_{1.5}Ni_{0.5}O₄ (LMNO) | Li_{5.4}PS_{4.4}Cl_{0.8}Br_{0.8} | Graphite | 5.0 | 3.0 | 25.0 | 16.1 | 0 | 45.1 | 4.15 | 114.1 | 86.0 |
| Com. Ex. 3 | LiNi_{0.6}Co_{0.2}Mn_{0.2}O₂ (NCM) | Li_{5.4}PS_{4.4}Cl_{0.8}Br_{0.8} | Silicon | 4.4 | 3.0 | 25.0 | 36.3 | 12.2 | 11.3 | 3.59 | 137.9 | 82.7 |
| Com. Ex. 4 | Li₂S:P₂S₅ = 75:25 Ketjen black composite material | Li_{5.8}PS_{4.8}Cl_{1.2} | Silicon | 4.0 | 0.0 | 25.0 | 0 | 0 | 0 | 1.21 | 326.9 | 74.5 |

It is clear from the results shown in Table 1 and the drawings that the all-solid-state batteries obtained in the examples had a low initial discharge voltage, but exhibited a higher initial discharge capacity and better cycle characteristics than those of the all-solid-state batteries of Comparative Examples 1 to 3 with the positive electrode active materials containing rare metals, which indicates that the batteries of the examples have comparable performance even though they do not contain rare metals (excluding a Li element).

The all-solid-state battery of Comparative Example 4 used a sulfide positive electrode active material not containing rare metals (excluding a Li element), and its battery configuration is identical to that of Example 2 using the argyrodite-type compound that is also sulfide as the positive electrode active material, except for the positive electrode active material. The all-solid-state battery of Comparative Example 4 has almost the same initial discharge voltage, but lower initial discharge capacity and cycle characteristics than those of the all-solid-state battery of Example 2. Therefore, it is seen that, since the all-solid-state battery of Comparative Example 4 not containing rare metals (excluding a Li element) and using a sulfide positive electrode active material, as in the argyrodite-type compound, does not contain the argyrodite-type compound, good characteristics of an all-solid-state battery are not obtained.

Examples 1 and 6 used different carbon materials as the conductive material, and it is seen that the initial capacity and the cycle characteristics of a battery are further improved by using Ketjen black as the conductive material as in Example 1. Thus, among the carbon materials used as conductive materials, it is preferable to use carbon black in terms of increasing the initial capacity and the discharge rate characteristics of a battery. From the viewpoint of making this advantage more remarkable, the carbon black is preferably Ketjen black, more preferably furnace black, and even more preferably oil furnace black.

### Industrial Applicability

In the battery of the present invention, rare metals including at least a Ni element and a Co element are not used to the extent possible, and, instead, raw materials whose supply is stable and whose price fluctuates little can be used to constitute the positive electrode active material.

## Claims

1. A battery comprising: a positive electrode; a negative electrode; and a solid electrolyte layer arranged between the positive electrode and the negative electrode, wherein the positive electrode comprises a positive electrode active material containing a lithium (Li) element, a sulfur (S) element, and a phosphorus (P) element and containing a crystal phase having an argyrodite-type crystal structure, and the total amount of a nickel (Ni) element and a cobalt (Co) element contained in the positive electrode active material is 0.1% by mass or less.

2. The battery according to claim 1, wherein the total amount of a nickel (Ni) element, a cobalt (Co) element, and a manganese (Mn) element contained in the positive electrode active material is 0.1% by mass or less.

3. The battery according to claim 1 or 2, wherein the total amount of rare metals (excluding the lithium (Li) element) contained in the positive electrode active material is 0.1% by mass or less.

4. The battery according to claim 1, wherein the solid electrolyte layer contains a solid electrolyte, and the solid electrolyte contains a lithium (Li) element, a sulfur (S) element, and a phosphorus (P) element and contains a crystal phase having an argyrodite-type crystal structure.

5. The battery according to claim 1, wherein the positive electrode contains a conductive material, and the positive electrode active material and the conductive material are a composite material.

6. The battery according to claim 5, wherein the conductive material is a carbon material or a metallic material.

7. The battery according to claim 5 or 6, wherein the composite material is a material obtained by compositing the positive electrode active material and the conductive material by applying mechanical energy.
